# EUROPEAN PATENT APPLICATION

(11) **EP 2 508 779 A1**
(43) Date of publication of application: **10.10.2012**
(21) Application number: 12160147.0
(22) Date of filing: 19.03.2012
(51) Int. Cl.: F16J 15/32

(54) **Method of producing a seal member**

(30) Priority: 07.04.2011 JP 2011085182
(71) Applicant: JTEKT Corporation, Osaka-shi, Osaka 542-8502 (JP)
(72) Inventor: Masuda, Yoshinori, Osaka-shi,, Osaka 542-8502 (JP)
(74) Representative: Winter, Brandl, Fürniss, Hübner, Röss, Kaiser, Polte - Partnerschaft

(57) **Abstract**

A method of producing a seal member (30) includes: a mixing step of mixing an elastic material (60) and fine particles (61) using a kneading device (71), so as to form a mixed material (62); a molding step of charging the mixed material (62) into a molding die (76,77), and forming an elastic molded piece (65) having a shape corresponding to that of a molded seal of the seal member (30); and a particle removing step of removing the fine particles (61) present on a surface of the elastic molded piece (65), so as to form the molded seal (40).

## Description

### BACKGROUND OF THE INVENTION

### 1. Field of the Invention

The invention relates to a method of producing a seal member.

### 2. Description of the Related Art

A known example of a seal member used in a rolling bearing device for a wheel, for example, for sealing an annular space between an inner ring member and an outer ring member includes a fixed portion fixed to an inner periphery of the outer ring member, and a lip that is in sliding contact with the vicinity of a raceway shoulder portion of the inner ring member.
In the seal member as described above, if two or more lips are formed, or the elastic force of the lip(s) is increased so as to enhance the sealing performance, the sliding resistance increases, resulting in an adverse influence on the fuel efficiency and significant wear of the lip(s).
Under the circumstances, a sealed rolling bearing as disclosed in Japanese Patent Application Publication No. 2004-19779 (JP 2004-19779 A), for example, is known as having an arrangement for reducing wear of a lip of a seal member.
In the sealed rolling bearing containing a lubricant, as disclosed in JP 2004-19779 A, a seal member (sealing plate) attached to one bearing ring is provided with a lip (lip portion) that abuts on and slides on the other bearing ring, and a sliding surface of the lip that is in sliding contact with the other bearing ring is formed with minute projections and recesses.
To form the minute projections and recesses on/in the surface of the lip of the seal member in the rolling bearing of JP 2004-19779A, a large number of pimple-like protrusions opposite in shape to a large number of dimple-like recesses are formed in advance, by an electric discharge machine, or the like, on a portion of a surface of a mold used in cure molding, the portion corresponding to the sliding surface and its surrounding, and a rubber material of the seal member is shaped under pressure during cure molding, to follow the shape of the projections, so that the lip is formed at its surface with the minute projections and recesses during molding of the seal member.

It is possible to reduce the sliding resistance by forming the minute projections and recesses on/in the surface of the lip of the seal member, as disclosed in JP 2004-19779 A.
However, a large number of pimple-like protrusions have to be formed on the molding surface of the molding die (mold), so as to form the minute projections and recesses on/in the surface of the lip; therefore, the cost of production of the molding die is increased, and the manufacturing cost of the seal member is increased accordingly.

### SUMMARY OF THE INVENTION

It is an object of the invention to provide a method of producing a seal member, by which a seal member that is able to reduce sliding resistance while assuring sealing performance is easily produced.

A method of producing a seal member according to an aspect of the invention includes: mixing an elastic material and fine particles using a kneading device, so as to form a mixed material; charging the mixed material into a molding die, and forming an elastic molded piece having a shape corresponding to that of a molded seal of the seal member; and removing the fine particles present on a surface of the elastic molded piece, so as to form the molded seal.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a vertical cross-sectional view showing a state in which a seal member according to an embodiment of the invention is mounted in a rolling bearing device for a wheel;
FIG. 2 is a vertical cross-sectional view showing, in enlargement, the seal member shown in FIG. 1;

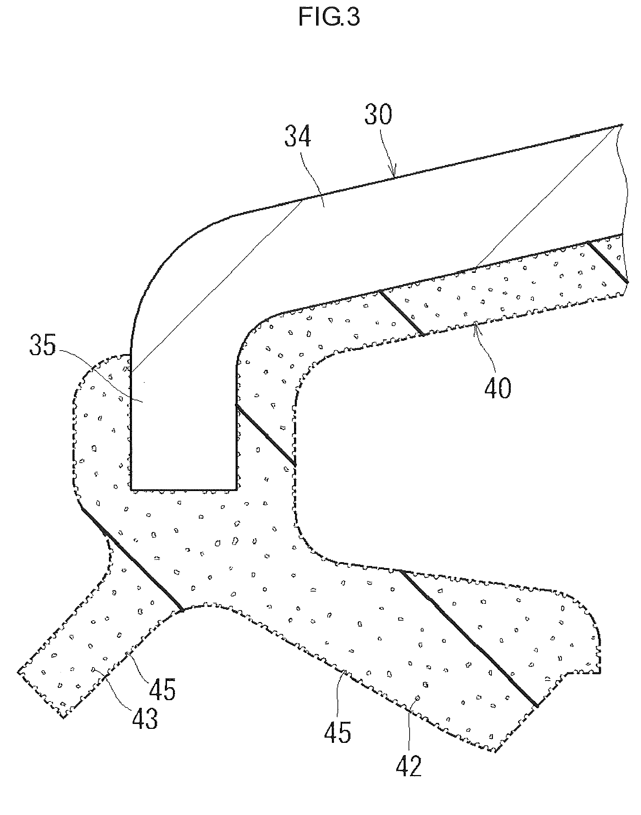

FIG. 3 is a vertical cross-sectional view showing, in enlargement, lips of the seal member shown in FIG. 2;

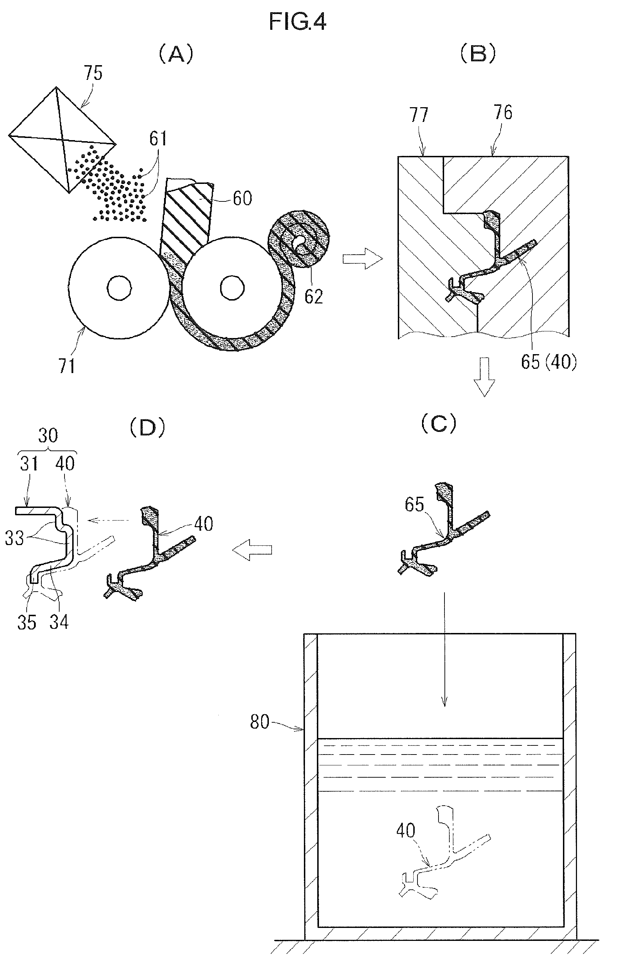

FIG. 4 illustrates respective steps of a method of producing a seal member according to the embodiment of the invention, wherein FIG. 4(A) is an explanatory view showing a mixing step, FIG. 4(B) is an explanatory view showing a molding step of forming an elastic molded piece, FIG. 4(C) is an explanatory view showing a particle removing step of removing fine particles present on a surface of the elastic molded piece so as to form a molded seal, and FIG. 4(D) is an explanatory view showing a joining step of joining the molded seal from which the fine particles are removed, and a core metal, into an integral structure; and
FIG. 5 is a vertical cross-sectional view showing another seal member produced by the method of producing the seal member according to the invention.

### DETAILED DESCRIPTION OF EMBODIMENT

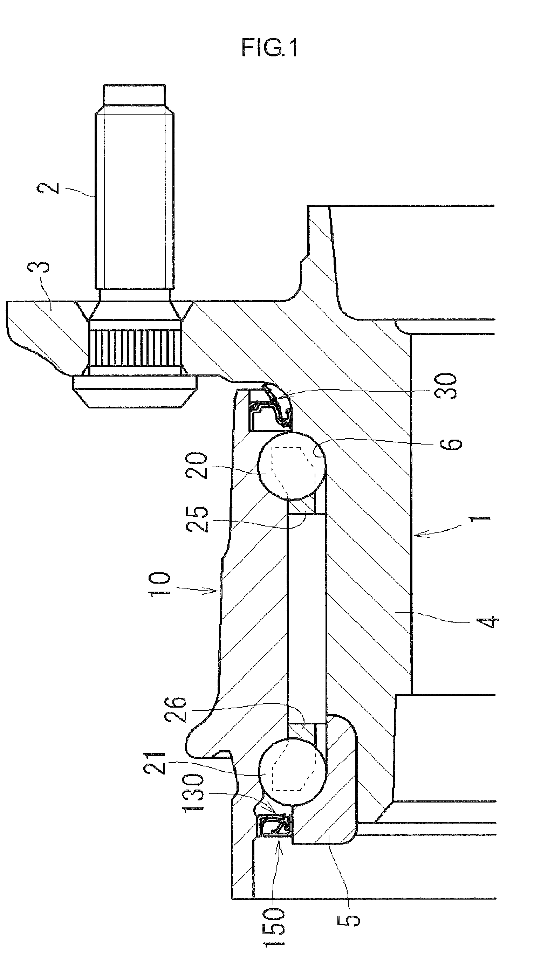

First, a rolling bearing device for a wheel on which a seal member produced by a method of producing a seal member according to an embodiment of the invention is mounted will be described.
As shown in FIG. 1, the rolling bearing device for a wheel includes an inner ring member 1 (which will also be called "hub wheel"), an outer ring member 10, and rolling elements 20, 21 that are respectively arranged in two rows. The rolling elements 20, 21 are rollably disposed respectively in two rows between the inner ring member 1 and the outer ring member 10, and are retained by cages 25, 26. The inner ring member 1 has a hub spindle 4, and a flange 3 formed integrally with the hub spindle 4. The flange 3 extends radially outward from an outer periphery of the hub spindle 4 near one end thereof. Multiple hub bolts 2 for fastening the wheel to the flange 3 are provided at given intervals in the flange 3.

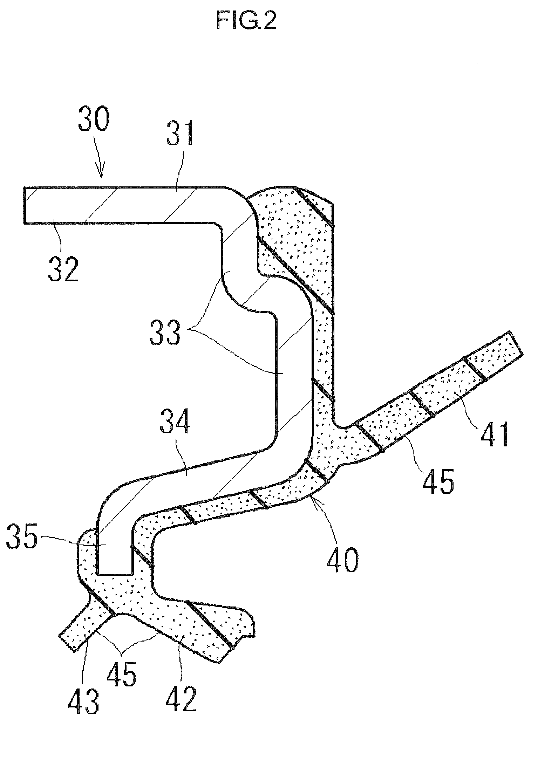

As shown in FIG. 1, an annular space is formed between an inner-ring shoulder portion of an inner-ring raceway surface 6 on one side (closer to the flange 3) of the inner ring member 1, and an inner periphery of one end portion of the outer ring member 10 which is opposed to the outer periphery of the inner-ring shoulder portion, and a seal member 30 for sealing the annular space is mounted in the annular space.
As shown in FIG. 2, the seal member 30 includes a core metal 31 and a molded seal 40.
The core metal 31 includes a cylindrical portion 32, an annular portion 33, a tapered portion 34, and a radially inner end portion 35. The cylindrical portion 32 is press-fitted in and fixed to an inner periphery of one end portion of the outer ring member 10. The annular portion 33 is formed through a bending process so as to extend radially inward from one end of the cylindrical portion 32. The tapered portion 34 is formed through a bending process so as to extend obliquely and inward from a radially inner end of the annular portion 33. The radially inner end portion 35 is formed through a bending process so as to extend radially inward from a distal end of the tapered portion 34.
The molded seal 40 is bonded to one side face of the core metal 31, i.e., the outer surfaces of the annular portion 33, tapered portion 34, and radially inner end portion 35, so as to form an integral structure.
The molded seal 40 includes a lip 41 that is in sliding contact with the vicinity of a base end portion of the flange 3 of the inner ring member 1, and lips 42, 43 that are in sliding contact with an outer periphery of an inner-ring shoulder portion.
The molded seal 40 is produced by a production method as described below, and its surface including the lips 41, 42, 43 is formed with minute projections and recesses 45.

Next, the method of producing the seal member according to one embodiment of the invention will be described with reference to FIG. 4(A) through FIG. 4(D).
The method of producing the seal member according to this embodiment includes a mixing step, a molding step, a particle removing step, and a joining step.
First, in the mixing step, as shown in FIG. 4(A), an elastic material 60, such as a rubber material or a soft resin material, in a molten state is fed to the upstream side of a clearance between a pair of rollers of a roller-type kneading device 71 as one example of kneading device, and fine particles 61 are fed from a particle charging device 75 into the elastic material 60.
Then, the elastic material 60 and the fine particles 61 are mixed together by the roller-type kneading device 71, so as to form a mixed material 62.
In this embodiment, water-soluble particles (e.g., salt, sugar, etc.) are used as the fine particles 61.
As the kneading device, a screw-type kneading device may be used in place of the roller-type kneading device 71.

Subsequently, in the molding step, the mixed material 62 is charged into a cavity formed between two molding dies 76, 77 that are placed in the open or closed position, as shown in FIG. 4(B), so as to form an elastic molded piece 65 having a shape corresponding to that of the molded seal 40 of the seal member 30.
Then, the two molding dies 76, 77 are brought into the open position, and the elastic molded piece 65 is removed from the dies 76, 77. When an undercut portion is present in the elastic molded piece 65, the elastic molded piece 65 is removed while the undercut portion of the molded piece 65 is elastically deformed.

Subsequently, in the particle removing step, the fine particles 61 present on a surface of the elastic molded piece 65 are removed, so that the molded seal 40 is formed.
In this embodiment, the fine particles 61 are water-soluble particles; therefore, as shown in FIG. 4(C), the elastic molded piece 65 is put into and washed in a wash tank 80 in which a wash liquid (such as hot water, warm water, or ambient temperature water) is stored.
In this manner, the fine particles 61 present on the surface of the elastic molded piece 65 are dissolved and removed, so that the molded seal 40 having minute projections and recesses 45 on its surface is formed.

Finally, in the joining step, the molded seal 40 is bonded integrally to one side face of the core metal 31, i.e., the outer surfaces of the annular portion 33, tapered portion 34 and radially inner end portion 35, with an adhesive or through cure adhesion, for example, to thus form the seal member 30, as shown in FIG. 4(D).

The method of producing the seal member according to this embodiment includes the above-described steps.
Thus, after the mixed material 62 of the elastic material 60 and the fine particles 61 are charged into the molding dies 76, 77, and the elastic molded piece 65 of which the shape corresponds to that of the molded seal 40 is formed, the fine particles 61 present on the surface of the elastic molded piece 65 are removed. In this manner, the molded seal 40 having minute projections and recesses 45 on its surface is easily produced.
Then, the molded seal 40 is joined (bonded) integrally to the core metal 31, so as to provide the seal member 30.
In the seal member 30 produced as described above, the lips 41, 42, 43 of the molded seal 40 assure sealing performance, and the minute projections and recesses 45 formed on the sliding surfaces of the lips 41, 42, 43 serve to reduce the sliding resistance.

Also, in this embodiment, the use of the water-soluble particles as the fine particles 61 makes it possible to dissolve the fine particles 61 present on the surface of the elastic molded piece 65 in the wash liquid (such as hot water, warm water, or ambient temperature water), and easily remove the fine particles 61. Consequently, the molded seal 40 is produced with improved efficiency, at reduced cost.

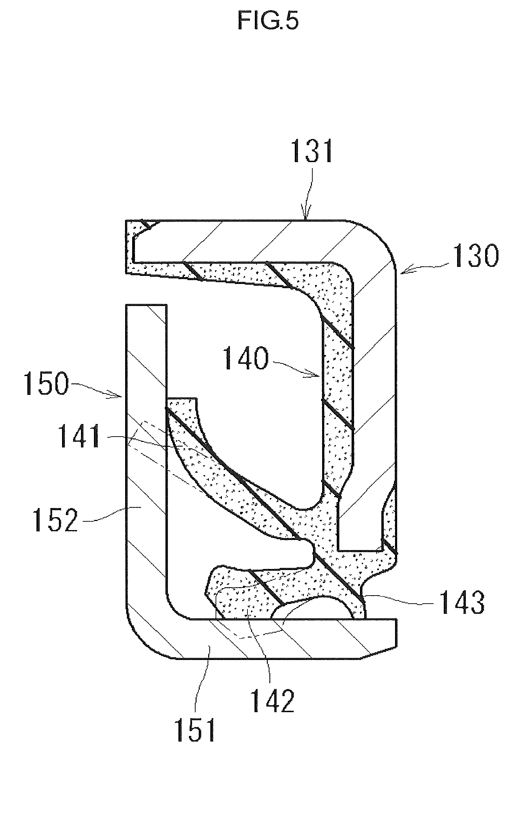

It is to be understood that this invention is not limited to the illustrated embodiment, but may be embodied in various forms, without departing from the principle of the invention.
For example, this invention may also be implemented in the case where a seal member 130 includes a core metal 131 and a molded seal 140, as shown in FIG. 5, and the molded seal 140 includes a lip 141 that is in sliding contact with an annular portion 152 of a slinger 150, and lips 142, 143 that are in sliding contact with an outer periphery of a cylindrical portion 151 of the slinger 150.
For example, a sealing device having the seal member 130 and the slinger 150 is disposed between a raceway shoulder portion of an inner ring body 5 mounted on an end portion of the hub spindle 4 of the inner ring member 1 of the rolling bearing device for a wheel, and an inner periphery of an end portion of the outer ring member 10, as shown in FIG. 1.
While the seal member 30 (130) includes the core metal 31 (131) and the molded seal 40 (140) in the illustrated embodiment, the seal member may consist solely of a molded seal.

According to the present invention, the use of the water-soluble particles makes it possible to dissolve the fine particles present on the surface of the elastic molded piece in the wash liquid (such as hot water or warm water), and easily remove the fine particles, thus effectively improving the productivity and reducing the cost.

## Claims

1. A method of producing a seal member, **characterized by** comprising:
mixing an elastic material and fine particles using a kneading device, so as to form a mixed material;
charging the mixed material into a molding die, and forming an elastic molded piece having a shape corresponding to that of a molded seal of the seal member; and
removing the fine particles present on a surface of the elastic molded piece, so as to form the molded seal.

2. The method according to claim 1, wherein:
water-soluble particles are used as the fine particles; and
the elastic molded piece is washed with a wash liquid, so that the fine particles present on the surface of the elastic molded piece are dissolved to be removed.
